# EUROPEAN PATENT APPLICATION

(11) **EP 2 368 707 A1**
(43) Date of publication of application: **28.09.2011**
(21) Application number: 10380043.9
(22) Date of filing: 24.03.2010
(51) Int. Cl.: B32B 5/26, B32B 7/04, E04D 12/00

(54) **Multilayer waterproofing and/or insulating synthetic sheet with adhesive capacity**

(71) Applicant: Atarfil, S.L., 18230 Atarfe Granada (ES)
(72) Inventor: Martin Sevilla, Gabriel, 18193 Monachil (Granada) (ES)
(74) Representative: Gonzalez-Alberto Rodriguez, Natalia

(57) **Abstract**

The invention relates to a multilayer waterproofing and/or insulating synthetic sheet with adhesive capacity formed by a multilayer sheet (1) obtained by coextrusion comprising a main synthetic layer (2) forming the actual waterproofing and/or insulating sheet and at least one additional layer (3) formed by a polymer which acquires adhesive properties in the presence of heat and absence of flame, which is incorporated on the lower face of the main synthetic layer (2), on the upper face of the main synthetic layer (2) or on both upper and lower faces.

## Description

### Field of the Invention

As expressed by the title of the present specification, the invention relates to a multilayer waterproofing and/or insulating synthetic sheet with adhesive capacity.

The object of the invention is focused on an industrial type synthetic sheet formed by polymers or mixtures thereof that can be applied in construction for waterproofing and/or insulation, which has the particularity of having a multilayer configuration providing it with capacity to adhere to the support in which it is installed by means of supplying flameless heat, achieving important advantages compared to the use of adhesives or mechanical attachments which the conventional synthetic sheets known up until now require.

The field of application of the present invention is comprised within the technical sector of construction, particularly in the area of the manufacture of waterproofing and insulating sheets.

### Background of the Invention

As is known, the construction industry normally uses sheets as waterproofing barriers in a wide variety of applications (tunnels, roofs, walls, reservoirs, ponds, dumps...) and also uses sheets as insulating barriers (both acoustic and heat barriers).

A typical waterproofing and/or insulation system is generally formed by different elements:
- The support: of wood, metal, concrete, etc.
- The main element: waterproofing membrane in the event that waterproofing is desired, acoustic insulator in the event that acoustic insulation is desired or heat insulator in the event that heat insulation is desired.
- Auxiliary products: Barriers against vapor, geotextiles,...

Due to the difficulty, to the production and transport cost of a single membrane to cover the entire surface to be waterproofed or insulated, the mentioned membranes or sheets are sold in a smaller size and must be attached to one another at the construction site and, on some occasions, adhered to the support to assure the leak-tightness of the system.

Different types of sheets can be used when waterproofing a construction job:
- Bituminous membranes are widely known for their use in commercial, industrial, residential structures...
   As indicated in the UNE 104400-3 standard "Instructions for the installation of waterproofing systems with asphalt membranes for the waterproofing and rehabilitation of roofs in building", prior to placing the bituminous sheets an asphalt prime coat must be applied to facilitate the adherence of the waterproofing to the support base.
   In the adhered systems, the bituminous sheets must be placed by heat welding on the priming of the base, the sheet is heated with the aid of the blow torch until the anti-adherent material is melted and the mastic of the sheet is soft enough, at the same time the sheet is gradually unwound and pressed against the support until the molten mastic comes out along the edges.
- Synthetic or polymer (plastic and rubber) sheets described in the UNE EN 13956 standard, in which the sheets are attached to one another by thermal fusion welding or, in the case of rubber, by means of a chemical reaction (vulcanization).
   This type of synthetic sheet floats on the support, i.e., it cannot be adhered thereto unless adhesives, mechanical attachments with screws and with flat washers are used or by means of surfacing with gravel.
   Therefore, the installation of a synthetic sheet at the construction site is complicated when there is a need to adhere it to the base support, since as of today it is not possible to adhere this type of sheet unless by means of using adhesives, and in most cases these attachments are not effective.

Therefore, there is a need to achieve an attachment of the synthetic sheets to the supports by means of supplying heat in the absence of flame and without using adhesives, this being the essential objective of the present invention with regard to which, on the other hand, it must be indicated that the applicant is not aware of the existence of any other invention having technical, structural and constitutive features similar to those that the sheet proposed herein presents.

### Description of the Invention

Thus, the multilayer waterproofing and/or insulating synthetic sheet with adhesive capacity proposed by the present invention is a remarkable novelty within its field of application since, according to its implementation, the objectives previously indicated as suitable are satisfactorily met, the characterizing details making it possible and distinguishing it from that already known being included in the final claims attached to the present specification.

Specifically the invention describes a synthetic sheet formed by polymers or mixtures thereof that can essentially be applied in construction for waterproofing and/or insulation, having the particularity of being provided with capacity to adhere to the support in which it is installed by means of supplying flameless heat and applying a slight pressure with a suitable tool, as is done with bituminous sheets.

To that end the sheet object of the invention is a multilayer coextruded sheet such that, in addition to the main layer forming the actual waterproofing/insulating sheet, it preferably incorporates on its lower face (typically the face that will be in contact with the support) an additional layer formed by a polymer having the peculiarity that it acquires adhesive properties in the presence of heat (but in the absence of flame), thus allowing the sheet to adhere to different types of supports (concrete, wood, sheet metal, etc.) simply by means of said supply of flameless heat.

It should be pointed out that the mentioned additional layer of polymer incorporated in the proposed sheet and which acquires adhesive properties in the presence of heat, could be incorporated in the main layer of the sheet by its lower face, as has been indicated, or by its upper face or both.

In addition, the described adhesion by means of supplying heat is carried out by means of conventional systems, for example by means of using a hot air torch or similar instrument and pressing with a tool designed for such purpose.

It is important to indicate that said type of adherence provides important advantages when performing at the construction site, including the following:
- Reducing time and costs since the use of adhesive materials or mechanical attachment elements is not necessary.
- Preventing contact of the workers with toxic or harmful chemical products generally present in this type of adhesive.
- Reducing the risks of fire at the construction site due to the use of adhesives.
- Reducing contact with harmful vapors coming from the sheets containing halogens in their molecular structure.

In turn, the advantages of this type of synthetic sheet compared to bituminous sheets are the following:
- Toxic fumes are not emitted during its application.
- The presence of flame is not required during installation.
- It has excellent resistance to roots.
- It has the possibility of being pigmented with colors, with the subsequent energy saving (light colored sheets) and aesthetic integration with the environment (possibility of green, blue, ocher tones...)
- It has excellent performance at low temperatures.
- It has greater durability in roofs exposed to the weather.
- It is environmentally friendly.

Finally, it has another series of advantages over the other synthetic sheets:
- The presence of adhesives is not required to adhere it to the support.
- Mechanical fixings are not required to fix it to the support.
- It allows precisely locating an eventual breaking of the sheet in the event that loss occurs due to leak-tightness.

### Description of the Drawings

To complement the description being made and for the purpose of aiding to better understand the features of the invention, a drawing is attached to the present specification as an integral part thereof, in which the following is depicted in an illustrative and non-limiting manner:

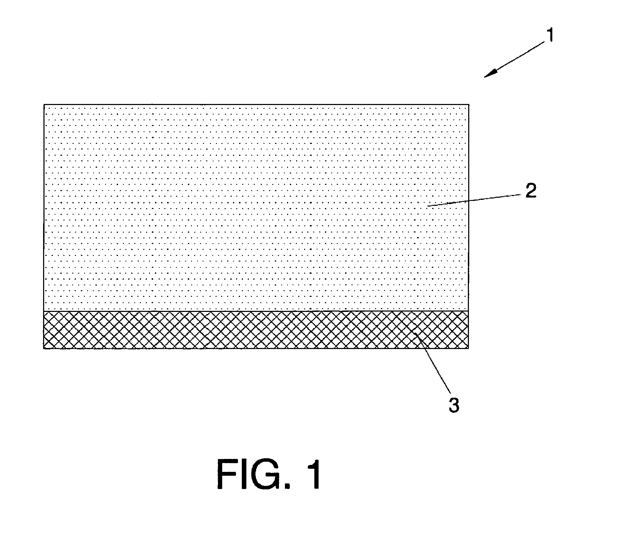

Figure 1 shows an enlarged cross-section view as a schematic depiction of the configuration of the sheet object of the invention, showing the parts forming it.

### Preferred Embodiment of the Invention

In view of the mentioned sole Figure 1, and according to the numbers therein, it can be observed how the sheet in question is an industrial type synthetic sheet formed by polymers or mixtures thereof that can be applied in construction for waterproofing and/or insulation, which is a multilayer sheet (1) obtained by coextrusion comprising a main synthetic layer (2) forming the actual waterproofing and/or insulating sheet incorporating at least one additional layer (3), preferably on its lower face, which generally is the face that will be in contact with the support, formed by a polymer which acquires adhesive properties suitable for adhering the sheet to different types of supports (concrete, wood, sheet metal, etc.) in the presence of heat but in the absence of flame simply by means of said supply of flameless heat and with the application of pressure.

The multilayer sheet (1) obtained has a standard nominal thickness between 1.00 mm and 3.00 mm, although the range of thicknesses can be from 0.5 mm to 8.00 mm.

A preferred example of the described sheet would be a 1.20 mm thick multilayer sheet (1) formed by two layers, an additional polymer layer (3) which acquires adhesive properties in the presence of heat, and a main synthetic layer (2) formed by flexible polyolefin resins (PE, PP,...) to which a percentage of heat stabilizers and stabilizers for protection against UV radiation is added.

In other examples, the sheet can be of different thicknesses but it has the same composition.

Likewise, the sheet can be of different thicknesses and with different layers and different compositions, incorporating additives, in different percentages, which provide it with fireproof features. '

Finally, the sheet can be of different thicknesses, with different layers in turn having different thicknesses, and of different compositions, and incorporating a polyester, glass fiber and/or glass veil reinforcement mesh added between said layers.

To obtain the different types of described sheet, a plastic transformation line formed essentially by extrusion equipment (extruding machine, coextrusion equipment and heads), a calender, sheet driving equipment, winder and equipment for feeding the extrusion equipment, will be used.

Having sufficiently described the nature of the present invention as well as the manner of putting it into practice, it is not considered necessary to further explain it so that a person skilled in the art can understand its scope and the advantages derived therefrom, stating that, within its essential nature, it can be carried out to practice in other embodiments differing in detail from the embodiment indicated as an example, being likewise covered by the protection that is sought, provided that its fundamental principle is not altered, changed or modified.

## Claims

1. An industrial type multilayer waterproofing and/or insulating synthetic sheet with adhesive capacity formed by polymers or mixtures thereof that can be applied in construction for waterproofing and/or insulation, **characterized in that** it consists of a multilayer sheet (1) obtained by coextrusion, and comprising a main synthetic layer (2) forming the actual waterproofing and/or insulating sheet and at least one additional layer (3) formed by a polymer with adhesive properties in the presence of heat and absence of flame.

2. The sheet according to claim 1, **characterized in that** the additional layer (3) formed by a polymer is incorporated on the lower face of the main synthetic layer (2).

3. The sheet according to claim 1, **characterized in that** the additional layer (3) formed by a polymer is incorporated on the upper face of the main synthetic layer (2).

4. The sheet according to claim 1, **characterized in that** the main synthetic layer (2) incorporates the additional layer (3) formed by a polymer on its upper face and on its lower face.

5. The sheet according to the previous claims, **characterized in that** its thickness is between 0.5 mm and 8.00 mm.

6. The sheet according to claim 5, **characterized in that** its thickness ranges between 1.00 mm and 3.00 mm.

7. The sheet according to the previous claims, **characterized in that** the main synthetic layer (2) is formed by flexible polyolefin resins (PE, PP,...) to which a percentage of heat stabilizers and stabilizers for protection against UV radiation is added.

8. The sheet according to the previous claims, **characterized in that** it incorporates additives in different percentages providing it with fireproof features.

9. The sheet according to the previous claims, **characterized in that** it incorporates a polyester, glass fiber and/or glass veil reinforcement mesh added between its layers.
